(19)

Europäisches Patentamt
European Patent Office
Office européen des brevets

(11) **EP 3 496 549 B1**

(12) **EUROPEAN PATENT SPECIFICATION**

(45) Date of publication and mention
of the grant of the patent:
**19.02.2020 Bulletin 2020/08**

(21) Application number: **17752336.2**

(22) Date of filing: **02.08.2017**

(51) Int Cl.:
***A23F 3/06*** (2006.01)

(86) International application number:
**PCT/EP2017/069563**

(87) International publication number:
**WO 2018/033396 (22.02.2018 Gazette 2018/08)**

(54) **A PROCESS FOR MANUFACTURING A LEAF TEA PRODUCT**

VERFAHREN ZUR HERSTELLUNG EINES BLATTTEEPRODUKTS

PROCÉDÉ DE FABRICATION D'UN PRODUIT À BASE DE THÉ EN FEUILLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.08.2016 EP 16184168**

(43) Date of publication of application:
**19.06.2019 Bulletin 2019/25**

(73) Proprietors:
• **Unilever PLC**
**London, Greater London EC4Y 0DY (GB)**
Designated Contracting States:
**CY GB IE MT**
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventors:
• **NUNN, Luke, Richard**
**Bedford**
**Bedfordshire MK44 1LQ (GB)**
• **SHARP, David, George**
**Bromham**
**Bedfordshire MK43 8JT (GB)**

(74) Representative: **Askew, Sarah Elizabeth**
**Unilever PLC**
**Unilever Patent Group**
**Colworth House**
**Sharnbrook**
**Bedford MK44 1LQ (GB)**

(56) References cited:
**WO-A1-2005/067727     WO-A1-2014/206883**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The present invention relates to leaf tea. More particularly it relates to post-auction processing of leaf tea.

**Background of the invention**

Beverages based on the tea plant (*Camellia sinensis*) have been popular throughout the world for many hundreds of years. Tea beverages are traditionally made by infusing the dry leaves of the plant *Camellia sinensis* in boiling water.

Most of the tea consumed in the Western world is so-called black tea, which is obtained by harvesting leaves of the plant *Camellia sinensis* and withering, rolling, enzymatically oxidising (fermenting), firing and sorting them. Alternatively, the leaves can be processed without the fermentation step to produce what is known as green tea, which is widely consumed in parts of Asia. In another variation, oolong tea is prepared by partial fermentation.

When it is harvested, the tea crop has a high moisture content. To avoid deterioration of the crop during transportation, initial processing of the tea leaves must occur at or very close to the tea plantation. Thus, regardless of type, the properties of leaf tea are constrained to a certain degree by the location of production. Because of this geographical limitation, the crop processed by a given tea factory is usually limited in terms of choice of tea varieties, agronomy and the manufacturing process used, which in turn can have a marked effect on the properties (e.g. aroma, flavour, *etc.*) and hence the quality of the final product.

Leaf tea is usually sold at auction, with the highest quality teas commanding the highest prices. Indeed, there is a substantial price difference between high quality and low quality tea. Design and control of the manufacturing process is known to influence quality. This has prompted extensive research aimed at optimising manufacturing conditions so as to yield a product with the highest possible quality. However, the post-auction processing of tea has been much less extensively investigated.

Black leaf tea is most often sold as a blend. Tea blends are developed through extensive consumer research. A blend should be constant in terms of appearance, quality and taste, so that a consumer will not be able to detect a difference from one purchase to the next. Achieving blend consistency is a challenge, and relies heavily on the expertise of trained tea tasters. A given blend can include teas from a multitude of different tea gardens. Furthermore, the characteristics of the tea from a given tea garden are not constant, and will vary from season to season and according to conditions used to process the tea crop. This means that the range of teas available from auction are not always uniform, and can make blend consistency a particular challenge, especially where this needs to be achieved within a particular price range. Therefore, there is interest in post-auction processing of tea as a route to providing more consistent blend quality and/or higher flexibility in blend composition. WO 2014/206883 discloses a process for producing a long leaf tea product with black tea characteristics.

**Summary of the invention**

The present inventors have found that post-auction processing of black tea under certain conditions can change the profile of the infusion liquor. In particular, the colour of the infusion liquor for a given level of soluble solids can be altered. This allows greater flexibility in blend composition, since it provides the possibility of changing the properties of black leaf tea bought at auction.

Thus in a first aspect, the present invention provides a process for manufacturing a black leaf tea product, the process comprising:

- providing black leaf tea material having a moisture content of less than 20 wt.% as a starting material; and then
- subjecting the black leaf tea starting material to a heat treatment step by contacting it with a heated surface at a temperature of 60°C to 100°C in the presence of steam for a duration of at least 2 minutes.

The end product of this process is a black leaf tea product which has different properties to the starting material. Thus in a second aspect, the present invention relates to a black leaf tea product obtainable by the process of the first aspect of the invention.

**Detailed description of the invention**

"Tea" for the purpose of the present invention means material from *Camellia sinensis* var. *sinensis* and/or *Camellia sinensis* var. *assamica.* The term "leaf tea" refers to leaf and/or stem material from the tea plant in an uninfused form (i.e. material which has not been subjected to a solvent extraction step). Leaf tea is dried to a moisture content of less than 20 wt.%, preferably less than 10 wt.%, more preferably less than 5 wt.%. The moisture content of the leaf tea will not usually be below 0.1 wt.%. Typically leaf tea has a moisture content of 1 to 10 wt.%.

The present invention relates to black leaf tea. As used herein, the term "black leaf tea" refers to substantially fermented leaf tea, wherein "fermentation" refers to the oxidative and hydrolytic process that tea undergoes when certain endogenous enzymes and substrates are brought together. During the so-called fermentation process, colourless catechins in the leaves and/or stem are converted to a complex mixture of yellow/orange to dark brown polyphenolic substances. For example, black leaf tea can be manufactured from fresh tea material by the steps of: withering, maceration, fermentation and drying. A more detailed description of the production of black tea can be found in Chapter 14 of "Tea: Cultivation to consumption" (edited by K.C. Wilson & M.N. Clifford, published in 1992).

The starting material for the process of the present invention is black leaf tea. Black leaf tea is a readily available commercial product which can be purchased in bulk at tea auctions. In other words, the term "black leaf tea" refers to the end product of black tea manufacture (sometimes referred to as "made tea"). The black leaf tea provided as the starting material for the claimed process has a moisture content of less than 20 wt.%, preferably less than 15 wt.%, more preferably less than 10 wt.%, and most preferably less than 5 wt.%. The moisture content of this black leaf tea is usually at least 0.1 wt.%, more usually at least 0.5 wt.%, or at least 1 wt.%. Typically the black leaf tea will have a moisture content of 0.5 to 10 wt.%.

The end product of the process of the present invention is a black leaf tea product. This black leaf tea product is manufactured by subjecting the black leaf tea starting material to certain thermal conditions by way of a heat treatment step in the presence of steam. Processing the black leaf tea in this way produces a black leaf tea product which has different properties to the starting material.

The heat treatment step is carried out by contacting the black leaf tea starting material with a heated surface at a temperature of 60°C to 100°C in the presence of steam.

The inventors have found that the process of the present invention makes it possible to decouple the colour and solids delivered in the infusion liquor when the black leaf tea product is brewed to give a beverage. For example, the black leaf tea product can deliver an infusion liquor having a less intense red colour for a given level of infusion solids. However, if the temperature of the heated surface is too high, then this trend (the infusion liquor having a less intense red colour for a given level of infusion solids) is not seen. Therefore during the heat treatment step, the temperature does not exceed 100°C; preferably the temperature does not exceed 95°C, and more preferably the temperature does not exceed 90°C.

The temperature of the heated surface needs to be sufficient to produce a black leaf tea product which has different properties to the starting material. Without wishing to be bound by theory, the inventors believe that temperatures below a certain threshold do not elicit appropriate changes in the starting material. Therefore during the heat treatment step, the temperature is at least 60°C, preferably at least 65°C, more preferably at least 70°C.

The inventors have found that even a relatively short heat treatment can elicit changes in the black leaf tea starting material. In particular, short durations seem to favour black leaf tea products which, on brewing, result in tea liquors having a higher flavour strength. The duration of the heat treatment step is at least 2 minutes. Preferably the duration of the heat treatment step is at least 2.5 minutes, more preferably at least 3 minutes, and most preferably at least 3.5 minutes.

In the interest of process efficiency, the duration of the heat treatment step is preferably no longer than 45 minutes, more preferably no longer than 30 minutes, still more preferably no more than 25 minutes, and most preferably no longer than 20 minutes. The duration of the heat treatment step can also have an impact on the darkness of the infusion liquor, with shorter durations favouring a black leaf tea product which produces a darker infusion liquor, and longer durations favouring a black leaf tea product which produces a paler/lighter infusion liquor.

With regard to the duration of the heat treatment step, it should be noted that any particular lower time limit can be associated with any particular upper time limit. A particularly preferred duration of the heat treatment step is from 3 to 25 minutes.

In the process of the present invention, the black leaf tea starting material is subjected to a heat treatment step in the presence of steam. The presence of steam during the process is associated with an improvement in the colour of the black leaf tea product, with higher amounts of steam generally resulting in darker leaf colour. Consumers tend to associate a darker leaf colour with higher quality black leaf teas. Thus the process of the present invention provides a potential route to increasing the quality score of a black leaf tea. The steam is preferably provided at a flow rate of at least 1 kg per hour, more preferably at least 2 kg per hour, and most preferably at least 5 kg per hour. However, very high levels of steam can sometimes have a negative impact on the flavour profile of infusions prepared from the black leaf tea product. Furthermore, high levels of steam in combination with prolonged durations of heat treatment may impact the moisture content of the black leaf tea product. Thus the steam is preferably provided at a flow rate of less than 30 kg per hour, more preferably less than 25 kg per hour, still more preferably less than 20 kg per hour and most preferably less than 15 kg per hour.

The flow rate of steam can also have an impact on the darkness of the infusion liquor, with lower flow rates favouring a black leaf tea product which produces a darker infusion liquor, and higher flow rates favouring a black leaf tea product which produces a paler/lighter infusion liquor.

It should be noted that any particular lower limit can be associated with any particular upper limit when considering the flow rate of steam during the process. A particularly preferred flow rate of steam is from 2 kg per hour to 15 kg per hour.

In the process of the present invention, the black leaf tea starting material is preferably subjected to a heat treatment step in a confined atmosphere. As used herein the term "confined atmosphere" refers to a system wherein diffusion of the gaseous medium surrounding the black leaf tea is restricted. Without wishing to be bound by theory, it is thought that such a confined atmosphere reduces the loss of volatiles from the tea material during the heat treatment step. Furthermore, the confined atmosphere is also thought to help facilitate contact of the steam with the black leaf tea, thereby allowing the process to run in a more efficient manner (e.g. with a short heating duration and/or a low flow rate of steam).

The heat treatment step is preferably carried out by directly contacting the black leaf tea starting material with one or more heated surfaces in the presence of steam. The thermal treatment step can conveniently be performed using a continuous roaster, such as the REVTECH continuous electrical roaster (REVTECH Process Systems), which combines vibration transport and heating via an electrically heated and vibrating spiral tube. Steam can easily and conveniently be injected into the roaster. The heated spiral tube of this system provides a confined atmosphere as defined above. The advantage of this type of system is that it allows the process to run continuously. A feeding system ensures a constant flow rate of black leaf tea into the roaster, the black leaf tea is transported through the heated tube by vibrations, and having undergone thermal treatment, the resulting black leaf tea product exits the system ready for packaging.

The process optionally comprises the additional and subsequent step of packaging the black leaf tea product. The black tea product is preferably packaged in an amount suitable for brewing a single serving of a tea beverage. It is preferred that the mass of the black tea product in the package is at least 1 g, as smaller amounts are difficult to accurately portion and dose. More preferably the mass is at least 1.2 g, and most preferably at least 1.4 g. It is further preferred that the mass of the black tea product in the package is less than 5 g, as larger amounts become inconvenient to store and/or handle. More preferably the mass is less than 4 g, and most preferably less than 3 g.

Since the process of the present invention is a post-auction process, it is does not need to be carried out in the proximity of a tea plantation. Indeed, whilst the starting material for the process is likely to be a black leaf tea product from a single plantation, the process is not limited in this way. Thus a further advantage of the process is that the starting material can be a tea blend (i.e. the black leaf tea having a moisture content of less than 20 wt.% can be a tea blend).

As used herein, the term "tea blend" refers to a mixture of two or more different black leaf teas. In the tea industry, the final packaged tea product sold to the consumer is commonly produced by blending different leaf teas together. Leaf teas for a blend are typically selected according to a number of different attributes, e.g. their quality, flavour, strength, body, size of leaf and price. Tea blending is a post-auction process, and allows teas of different origins to be combined to meet consumer preferences. For example, a tea blend will often have different sensorial properties to the individual component leaf teas that are mixed to make the blend.

Additionally or alternatively, the black leaf tea product obtainable by the process of the present invention can be used as a component of a tea blend. In other words, the black leaf tea product is preferably blended with one or more additional black leaf teas. Indeed, it is envisaged that the tea blend may comprise both the black leaf tea starting material and the black leaf tea product.

The present inventors have found that the black leaf tea product obtainable by the process has different colour attributes to the black leaf tea starting material, for example in terms of leaf colour and/or infusion colour.

Colour can be expressed using the coordinates of the CIE 1976 L*a*b* colour space. The CIE L*a*b* colour space is organised in a cubic form. The L* axis runs from top to bottom. The maximum value for L* is 100 (which represents a perfect reflecting diffuser), and the minimum value for L* is 0 (which represents black). The a* and b* axes have no specific numerical limits. The a* axis extends from green (-a*) to red (+a*), and the b* axis from blue (-b*) to yellow (+b*). CIE L*a*b* values can be measured by colourimetry (according to the joint ISO/CIE standard ISO 11664-4:2008(CE); CIE S 014-4/E:2007). The colour of the black leaf tea product can be measured using CIE L*a*b* colour space. This measurement can be performed directly on the leaf tea by colourimetry (according to the joint ISO/CIE standard ISO 11664-4:2008(CE); CIE S 014-4/E:2007). Consumers tend to perceive black leaf teas with a darker appearance as being of higher quality. Thus the leaf L* value is of particular interest when considering the appearance of black leaf tea, since lower leaf L* values indicate a darker leaf colour. Relatively small differences in the leaf L* value for black leaf tea can be perceived visually.

The present inventors have found that the process of the present invention means that it is possible to decouple colour and solids delivered in the infusion liquor when the black leaf tea product is brewed to give a beverage. For example, the black leaf tea product can deliver an infusion liquor having a less intense red colour for a given level of infusion solids.

The properties of the infusion produced by brewing the leaf tea product in water can be easily and reliably determined experimentally. An infusion is prepared by contacting 2g of tea with 200 ml freshly boiled water for 2 mins without stirring. The colour of the infusion liquor is expressed using the coordinates CIE L*a*b* colour space, which are measured by colourimetry (according to the joint ISO/CIE standard ISO 11664-4:2008(CE); CIE S 014-4/E:2007). The amount of infusion solids can be calculated by determining the dry mass of the infusion liquor. More precisely, a 50 ml sample of the infusion liquor is taken and weighed using an accurate balance. This sample is then allowed to dry completely in an oven for 16 hours, and then re-weighed. The difference between the mass of the initial infusion liquor and the mass of the dry sample is the amount of infusion solids per 50 ml of infusion liquor, and the amount of infusion solids (in mg/ml) is subsequently calculated from this value.

Preferably contact of 2g of the black leaf tea product with 200 ml freshly boiled water for 2 minutes produces a beverage wherein the a* value per mg/ml of infusion solids (or Normalised Infusion Colour - NIC) is less than 6.1, more preferably less than 6.0, still more preferably less than 5.9. The a* value per mg/ml of infusion solids will typically be at least 4.2, more preferably at least 4.5, still more preferably at least 5.0. A particularly preferred a* value per mg/ml of infusion solids for teas brewed under these conditions is from 5.0 to 6.0

As set out above, the properties of the infusion liquor obtained by a standard infusion protocol (contacting of 2g of leaf tea with 200 ml of freshly boiled water for 2 minutes) can be measured. Normalised Infusion Colour (NIC) can be expressed in terms of the infusion a* value per mg/ml of infusion solids. The effect of the process on the infusion colour can thus be illustrated by comparing the infusion colour of the black leaf tea starting material ($NIC_{initial}$) with that of the black leaf tea product obtained by the process ($NIC_{final}$). Thus the change in Normalised Infusion Colour elicited by the process of the present invention ($\Delta NIC$) can be calculated as follows:

$$\Delta NIC = (NIC_{final}) - (NIC_{initial})$$

wherein negative values of $\Delta NIC$ indicate that the black leaf tea product delivers an infusion liquor having a less intense red colour for a given level of infusion solids than that of the black leaf tea starting material. Preferably $\Delta NIC$ is negative, meaning that the black leaf tea product delivers an infusion liquor that is more golden/less red for a given level of infusion solids than that of the black tea starting material. In particular, it is preferred that $\Delta NIC$ is -0.1 to -2.0, more preferably -0.15 to -1.5, still more preferably -0.25 to -1.4, most preferably -0.30 to -1.35.

Although the trend is for the redness (a* value) and the NIC (a*/solids value) of the infusion liquor to decrease, this is not necessarily associated with a corresponding lightening of the infusion liquor (i.e. an increase in the infusion L* value). In fact, for short heat treatments and/or low steam flow rates the darkness of the infusion liquor may remain essentially unchanged, or even become darker.

The effect of the process the darkness of the infusion liquor can be illustrated by comparing the infusion L* values of the black leaf tea starting material ($L^*_{initial}$) with those of the black leaf tea product obtained by the process ($L^*_{final}$).

Thus the change in infusion darkness elicited by the process of the present invention ($\Delta L^*$) can be calculated as follows:

$$\Delta L^* = (L^*_{initial}) - (L^*_{final})$$

wherein positive values of $\Delta L^*$ indicate that the black leaf tea product delivers an infusion liquor which is darker than the infusion liquor delivered by the black leaf tea starting material, and negative values of $\Delta L^*$ indicate that the black leaf tea product delivers an infusion liquor which is lighter/paler than the infusion liquor delivered by the black leaf tea starting material.

Wherein the processing conditions result in a black tea product having an infusion liquor which is darker than the infusion liquor of the black leaf tea starting material it is preferred that $\Delta L^*$ is 1.5 to 11, more preferably 1.6 to 10.7, still more preferably 1.7 to 10.5, wherein any particular lower limit can be associated with any particular upper limit.

It is particularly preferred that the process of the present invention is such that:

- the black leaf tea starting material has an infusion L* value of $L^*_{initial}$,
- the black leaf tea product has an infusion L* value of $L^*_{final}$, and
- the difference in infusion L* value is $\Delta L^*$, and $\Delta L^* = (L^*_{initial}) - (L^*_{final})$,
- wherein infusion the infusion L* value is determined for an infusion liquor obtained by contacting 2 g of the black leaf tea starting material (for $L^*_{initial}$) or the black leaf tea product (for $L^*_{final}$) with 200 ml freshly boiled water for 2 minutes;
- the black leaf tea starting material has a Normalised Infusion Colour of $NIC_{initial}$,
- the black leaf tea product has a Normalised Infusion Colour of $NIC_{final}$, and
- the difference in Normalised Infusion Colour is $\Delta NIC$, and $\Delta NIC = (NIC_{final}) - (NIC_{initial})$,
- wherein Normalised Infusion Colour is expressed in terms of a* values per mg/ml of infusion solids as determined for an infusion liquor obtained by contacting 2 g of the black leaf tea starting material (for $NIC_{initial}$) or the black leaf tea product (for or $NIC_{final}$) with 200 ml freshly boiled water for 2 minutes; and wherein
- $\Delta NIC$ is -0.1 to -2.0 and $\Delta L^*$ is 1.5 to 11.

Wherein the processing conditions result in a black tea product having an infusion liquor which is lighter/paler than the infusion liquor of the black leaf tea starting material it is preferred that $\Delta L^*$ is -1.0 to -8.0, more preferably -1.1 to -7.0, still more preferably -1.2 to -6.0, wherein any particular lower limit can be associated with any particular upper limit.

It is particularly preferred that the process of the present invention is such that:

- the black leaf tea starting material has an infusion L* value of $L^*_{initial}$,
- the black leaf tea product has an infusion L* value of $L^*_{final}$, and
- the difference in infusion L* value is $\Delta L^*$, and $\Delta L^* = (L^*_{initial}) - (L^*_{final})$,
- wherein infusion the infusion L* value is determined for an infusion liquor obtained by contacting 2 g of the black leaf tea starting material (for $L^*_{initial}$) or the black leaf tea product (for $L^*_{final}$) with 200 ml freshly boiled water for 2 minutes;
- the black leaf tea starting material has a Normalised Infusion Colour of $NIC_{initial}$,
- the black leaf tea product has a Normalised Infusion Colour of $NIC_{final}$, and
- the difference in Normalised Infusion Colour is $\Delta NIC$, and $\Delta NIC = (NIC_{final}) - (NIC_{initial})$,
- wherein Normalised Infusion Colour is expressed in terms of a* values per mg/ml of infusion solids as determined for an infusion liquor obtained by contacting 2 g of the black leaf tea starting material (for $NIC_{initial}$) or the black leaf tea product (for or $NIC_{final}$) with 200 ml freshly boiled water for 2 minutes; and wherein
- $\Delta NIC$ is -0.1 to -2.0 and $\Delta L^*$ is -1.0 to -8.0.

To allow for long-term storage stability, the black leaf tea product of the present invention (i.e. the product obtainable from the thermal treatment process) preferably has a moisture content of from 0.1 to 20 wt.%. It will be understood that these amounts refer to the water content of the black leaf tea product prior to using the product to produce a beverage (i.e. prior to brewing). As such, it will be appreciated that the process of the present invention is not expected to have a significant impact on the moisture content of the black leaf tea, even if the process is conducted in the presence of steam. Therefore, the black leaf tea product preferably has a moisture content which is essentially the same as the moisture content of the black leaf tea starting material, and the preferred moisture contents of the starting material specified above apply *mutatis mutandis* to the black leaf tea product.

The black tea product of the present invention is optionally packaged. Non-limiting examples of suitable packaging options include infusion packets (such as tea bags), cartridges for beverage brewing machines, tea sticks, and the like.

As used herein the term "comprising" encompasses the terms "consisting essentially of" and "consisting of". All percentages and ratios contained herein are calculated by weight unless otherwise indicated. It should be noted that in specifying any range of values or amounts, any particular upper value or amount can be associated with any particular lower value or amount. Except in the operative and comparative examples, all numbers in the description indicating amounts of materials, conditions of reaction, physical properties of materials, and/or use are to be understood as being preceded by the word "about". The various features of the embodiments of the present invention referred to in individual sections above apply, as appropriate, to other sections *mutatis mutandis*. Consequently features specified in one section may be combined with features specified in other sections as appropriate. The disclosure of the invention as found herein is to be considered to cover all embodiments as found in the claims as being multiply dependent upon each other. Unless defined otherwise, all technical and scientific terms used herein have the same meaning as commonly understood by one of ordinary skill in the art in the field of tea processing.

The present invention will now be illustrated by reference to the following non-limiting examples.

## Examples

A black leaf tea blend (PG Tips) was used as the starting material, and portions of this material were subjected to a heat treatment step by passing them through a REVTECH continuous electrical roaster (REVTECH Process Systems). Different heat treatment regimes were achieved by controlling the temperature of the heated surfaces, the flow rate of steam through the roaster, and the residence time of the tea blend within the roaster. A portion of the starting material was set aside for use as a control sample; this portion was not passed through the roaster and thus was not subjected to any kind of thermal treatment.

Infusions were prepared from each of the thermally treated samples and the control sample. Each infusion was made by infusing 2 g of leaf tea in 200 ml of freshly boiled water for 2 minutes without stirring. The L*a*b* values of the resulting infusions were determined with a CIE colourimeter (Minolta). To determine the level of infusion solids, a 50 ml sample of the infusion liquor was taken and weighed using an accurate balance. This sample was then allowed to dry completely in an oven for 16 hours, and then re-weighed. The difference between the mass of the initial infusion liquor and the mass of the dry sample was used to calculate the amount of infusion solids (in mg/ml).

Example 1

Samples A to D and 1 to 3 were produced by keeping the duration of the heat treatment step constant (4 minutes) and varying the heat treatment regime (i.e. the temperature of the heated surface and/or the amount of steam injected into the roaster). The heat treatment regimes for these samples are summarised in Table 1.

Table 1

| | Sample | | | | | | | |
|---|---|---|---|---|---|---|---|---|
| | Control | A | 1 | 2 | 3 | B | C | D |
| Temp (°C) | - | 90 | 90 | 90 | 90 | 120 | 120 | 120 |
| Steam (kg/h) | - | - | 5 | 10 | 30 | - | 5 | 10 |
| Duration (min) | - | 4 | 4 | 4 | 4 | 4 | 4 | 4 |

The data in Table 2 shows the results of the colour analysis using CIE L*a*b* colour space for the leaf tea product obtained after the heat treatment of these samples, and also for the infusions resulting from brewing these samples according to the protocol set out above.

Table 2

| Sample | Leaf tea | | | Infusion | | | | |
|---|---|---|---|---|---|---|---|---|
| | L* | a* | b* | L* | a* | b* | Solids (mg/ml) | NIC (a*/solids) |
| Control | 25.5 | 4.0 | 5.4 | 68.5 | 17.2 | 73.2 | 2.775 | 6.198 |
| A | 25.9 | 3.9 | 5.5 | 56.6 | 17.6 | 64.2 | 2.850 | 6.175 |
| 1 | 25.7 | 4.1 | 5.6 | 58.0 | 16.2 | 62.4 | 2.720 | 5.956 |
| 2 | 24.5 | 4.4 | 4.9 | 60.9 | 13.9 | 59.8 | 2.370 | 5.865 |
| 3 | 22.7 | 4.1 | 2.9 | 64.0 | 11.4 | 56.6 | 2.340 | 4.872 |
| B | 24.0 | 4.1 | 4.6 | 70.7 | 18.7 | 76.8 | 2.780 | 6.727 |
| C | 23.9 | 4.2 | 4.6 | 69.9 | 20.9 | 79.9 | 2.845 | 7.346 |
| D | 23.1 | 4.2 | 3.9 | 69.8 | 21.1 | 79.0 | 2.860 | 7.378 |

For the leaf tea, the coordinate L* is of particular interest, with lower L* values indicating a darker leaf colour. Consumers tend to perceive darker coloured leaf teas as being of higher quality. It can be seen that the trend was for the darkness of the leaf tea to increase (i.e. corresponding to a decrease in the leaf tea L* value) following heat treatment. In particular, higher steam flow rates seem to be associated with darker leaf colour.

For the infusions, the coordinate L* remains pertinent, with lower L* values indicating a darker infusion colour (and higher L* values indicating a lighter/paler infusion colour). In addition, the coordinate a* is of particular relevance, as higher values of this coordinate indicate a redder colour (whilst lower values indicate a greener colour).

The infusion liquors of the 90°C samples were all darker than the control liquor (i.e. these samples had a lower L* value than the control). In contrast, the infusion liquors of the 120°C samples were all lighter than the control liquor.

For the samples heated in the absence of steam (samples A and B), the redness of the infusion liquor (a* value) increased compared to the control. The same trend was seen for the samples heated at 120°C in the presence of steam (samples C and D). Indeed for these samples higher steam flow rates correlated with higher a* values. The opposite trend was seen for samples heated at 90°C in the presence of steam (samples 1, 2 and 3). For these samples the redness of the infusion liquor (a* value) decreased compared to the control, and higher steam flow rates correlated for lower a* values.

The same trends seen for the infusion a* coordinate were observed on calculating the Normalised Infusion Colour (NIC), i.e. the redness of the infusion liquor per level of infusion solids (a*/solids value). Compared to the control, there was an increase in NIC for samples B, C and D, and a decrease in NIC for samples 1, 2 and 3.

The sensorial properties of the brewed teas were assessed in an informal tasting session. The observations from this session are summarised in Table 3.

Table 3

| Sample | Temp (°C) | Steam (kg/h) | Infusion flavour |
|---|---|---|---|
| **A** | 90 | - | More bitter/astringent than control |
| **1** | 90 | 5 | Higher flavour strength than control |
| **2** | 90 | 10 | Black tea |
| **3** | 90 | 30 | Lower bitterness/higher flavour strength than control |
| **B** | 120 | - | Black tea |
| **C** | 120 | 5 | Black tea |
| **D** | 120 | 10 | Black tea |

It can be seen from Table 3 that the 120°C samples (i.e. samples B, C and D) had a good black tea flavour, which was judged to be similar to the control. Certain changes in infusion flavour were associated with the 90°C samples. Sample A (90°C, no steam) had a more bitter/astringent infusion flavour than the control. In contrast, sample 3 (90°C, 30 kg/hour steam) has a less bitter flavour than the control. Furthermore, sample 1 (90°C, 5 kg/hour steam) and sample 3 (90°C, 30 kg/hour steam) were both judged to have a stronger infusion flavour than the control. Thus it appears that certain thermal treatment conditions are able to uncouple colour delivery from infusion flavour.

Example 2

Samples E to I and 4 to 6 were produced by keeping the duration of the heat treatment step constant (6 minutes) and varying the heat treatment regime (i.e. the temperature of the heated surface and/or the amount of steam injected into the roaster). The heat treatment regimes for these samples are summarised in Table 4.

Table 4

| | Sample | | | | | | | | |
|---|---|---|---|---|---|---|---|---|---|
| | Control | E | 4 | 5 | 6 | F | G | H | I |
| **Temp (°C)** | - | 90 | 90 | 90 | 90 | 120 | 120 | 120 | 120 |
| **Steam (kg/h)** | - | - | 5 | 10 | 30 | - | 5 | 10 | 30 |
| **Duration (min)** | - | 6 | 6 | 6 | 6 | 6 | 6 | 6 | 6 |

The data in Table 5 shows the results of the colour analysis using CIE L*a*b* colour space for the leaf tea product samples obtained after the heat treatment. The L* values for the samples heated in the absence of steam (samples E and F) were similar to that of the control leaf material. In contrast, the samples heated in the presence of steam had lower L* values than the control material, indicating that these leaf tea products were darker in colour than the control.

The data in Table 5 also shows the results of colour analysis for the infusions resulting from these samples. For the samples contacted with a heated surface at 90°C in the presence of steam (samples 4, 5 and 6), the trend observed was that the a* value for the infusion decreased as the flow rate of steam increased.

The L* values of the infusion liquors prepared from the 90°C samples indicate that these liquors are slightly lighter than the control liquor. In contrast, the L* values of the infusion liquors prepared from the 120°C samples indicate that these liquors are darker than the control liquor.

The trend is for the Normalised Infusion Colour (NIC) (i.e. the a*/solids value) to be higher than that of the control for the 120°C samples, and lower than that of the control for the 90°C samples. Indeed, for a given flow rate of steam, the NIC of the 90°C sample was always lower than that of the corresponding 120°C sample.

Table 5

| Sample | Leaf tea | | | Infusion | | | | |
|---|---|---|---|---|---|---|---|---|
| | L* | a* | b* | L* | a* | b* | Solids (mg/ml) | NIC (a*/solids) |
| Control | 25.5 | 4.0 | 5.4 | 68.5 | 17.2 | 73.2 | 2.775 | 6.198 |
| E | 26.6 | 4.4 | 6.1 | 65.2 | 18.5 | 74.8 | 3.125 | 5.920 |
| 4 | 24.9 | 4.4 | 5.1 | 66.3 | 17.7 | 73.5 | 2.920 | 6.062 |
| 5 | 24.0 | 4.4 | 4.1 | 66.8 | 15.0 | 68.0 | 2.665 | 5.629 |
| 6 | 22.8 | 4.1 | 2.9 | 72.2 | 12.5 | 65.1 | 2.570 | 4.864 |
| F | 25.1 | 4.4 | 5.1 | 57.0 | 18.3 | 63.5 | 2.730 | 6.703 |
| G | 24.2 | 4.3 | 4.5 | 54.9 | 17.6 | 60.9 | 2.690 | 6.543 |
| H | 23.4 | 4.2 | 3.8 | 57.3 | 17.4 | 61.5 | 2.640 | 6.591 |
| I | 23.2 | 3.9 | 3.6 | 63.7 | 12.1 | 56.6 | 2.240 | 5.402 |

The sensorial properties of some of the brewed teas were assessed in an informal tasting session. The observations from this session are summarised in Table 6.

Table 6

| Sample | Temp (°C) | Steam (kg/h) | Infusion flavour |
|---|---|---|---|
| E | 90 | - | Black tea |
| 4 | 90 | 5 | Black tea |
| 5 | 90 | 10 | Black tea |
| 6 | 90 | 30 | Higher bitterness/higher flavour strength than control |
| F | 120 | - | Not assessed |
| G | 120 | 5 | Not assessed |
| H | 120 | 10 | Not assessed |
| I | 120 | 30 | Not assessed |

The data in Table 6 shows that most of the samples assessed had good black tea flavour, which was judged to be similar to the control (standard PG Tips blend). This suggests that the decrease in NIC observed for these samples was generally achieved without impacting the flavour of the brewed beverage. In fact, the only sample judged to have a significantly different flavour to the control was sample 6 (90°C, 30 kg/hour steam), which had the lowest NIC of all the samples in this example. The participants did not report any difference in liquor colour between the 90°C samples and the control sample. Thus the experimental data suggests that infusion flavour and infusion colour have been uncoupled.

In conclusion, this example shows that post-auction processing of black tea under certain thermal conditions yields a black leaf tea product which can deliver a good black tea flavour despite having a paler/less red infusion colour. This type of post-auction processing can also have a beneficial effect on the appearance of the black leaf tea.

Example 3

Samples 7 to 12 were produced by keeping the duration of the heat treatment step constant (11 minutes) and varying the heat treatment regime (i.e. the temperature of the heated surface and/or the amount of steam injected into the roaster). The heat treatment regimes for these samples are summarised in Table 7.

Table 7

| | Sample | | | | | | |
|---|---|---|---|---|---|---|---|
| | Control | 7 | 8 | 9 | 10 | 11 | 12 |
| Temp (°C) | - | 70 | 70 | 70 | 90 | 90 | 90 |
| Steam (kg/h) | - | 5 | 10 | 20 | 5 | 10 | 20 |
| Duration (min) | - | 11 | 11 | 11 | 11 | 11 | 11 |

The data in Table 8 shows the results of the colour analysis using CIE L*a*b* colour space for the leaf tea product samples obtained after the heat treatment. Once again, samples heated in the presence of steam were shown to have lower L* values than the control material, indicating that these leaf tea products were darker in colour than the control.

Table 8

| Sample | Leaf tea | | | Infusion | | | | |
|---|---|---|---|---|---|---|---|---|
| | L* | a* | b* | L* | a* | b* | Solids (mg/ml) | NIC (a*/solids) |
| Control | 25.5 | 4.0 | 5.4 | 68.5 | 17.2 | 73.2 | 2.775 | 6.198 |
| 7 | 23.5 | 4.5 | 4.1 | 71.2 | 12.5 | 65.5 | 2.705 | 4.621 |
| 8 | 22.4 | 4.2 | 3.0 | 70.9 | 13.5 | 65.4 | 2.540 | 5.315 |
| 9 | 21.8 | 3.8 | 2.0 | 73.6 | 11.4 | 61.4 | 2.350 | 4.851 |
| 10 | 23.2 | 4.4 | 3.9 | 70.6 | 13.9 | 66.2 | 2.555 | 5.440 |
| 11 | 21.8 | 3.9 | 2.3 | 71.8 | 12.3 | 62.6 | 2.300 | 5.348 |
| 12 | 21.7 | 3.8 | 2.0 | 74.5 | 10.2 | 59.1 | 2.415 | 4.224 |

The data in Table 8 also shows the results of colour analysis for the infusions resulting from these samples. For a given temperature, the a* value of the infusion liquor tended to decrease as the flow rate of steam increased, typically accompanied by an increase in L* value. The Normalised Infusion Colour (NIC) (i.e. a*/solids values) was lower than that of the control for all of the samples investigated in this example.

In conclusion, this example shows that thermal treatment in the presence of steam leads to black leaf tea products having a darker leaf colour, even when the thermal treatment involves a relatively low temperature. For a given temperature, the trend is for paler/less red infusion liquors as the flow rate of steam increases.

**Claims**

1. A process for manufacturing a black leaf tea product, the process comprising:

   • providing black leaf tea material having a moisture content of less than 20 wt.% as a starting material; and then
   • subjecting the black leaf tea starting material to a heat treatment step by contacting it with a heated surface at a temperature of 60°C to 100°C in the presence of steam for a duration of at least 2 minutes.

2. A process as claimed in claim 1 wherein the duration of the heat treatment step is from 3 to 25 minutes.

3. A process as claimed in claim 1 or claim 2 wherein the steam is provided at a flow rate of at least 1 kg per hour.

4. A process as claimed in any one of claims 1 to 3 wherein the steam is provided at a flow rate of less than 25 kg per hour.

5. A process as claimed in any one of claims 1 to 4 wherein heated surface is at a temperature of 65°C to 95°C.

6. A process as claimed in any one of claims 1 to 5 wherein the black leaf starting material has a moisture content of less than 10 wt.%.

**7.** A process as claimed in any one of claims 1 to 6 wherein the black leaf tea starting material is a tea blend.

**8.** A process as claimed in any one of claims 1 to 7 wherein the black leaf tea product has a moisture content of less than 20 wt.%.

**9.** A process as claimed in claim 8 wherein the black leaf tea product has a moisture content of less than 10 wt.%.

**10.** A process as claimed in any one of claims 1 to 9 wherein the heat treatment step is carried out in a confined atmosphere.

**11.** A process as claimed in any one of claims 1 to 10 wherein:

- the black leaf tea starting material has an infusion L* value of $L^*_{initial}$,
- the black leaf tea product has an infusion L* value of $L^*_{final}$, and
- the difference in infusion L* value is $\Delta L^*$, and $\Delta L^* = (L^*_{initial}) - (L^*_{final})$,
- wherein infusion the infusion L* value is determined for an infusion liquor obtained by contacting 2 g of the black leaf tea starting material (for $L^*_{initial}$) or the black leaf tea product (for $L^*_{final}$) with 200 ml freshly boiled water for 2 minutes;
- the black leaf tea starting material has a Normalised Infusion Colour of $NIC_{initial}$,
- the black leaf tea product has a Normalised Infusion Colour of $NIC_{final}$, and
- the difference in Normalised Infusion Colour is $\Delta NIC$, and $\Delta NIC = (NIC_{final}) - (NIC_{initial})$,
- wherein Normalised Infusion Colour is expressed in terms of a* values per mg/ml of infusion solids as determined for an infusion liquor obtained by contacting 2 g of the black leaf tea starting material (for $NIC_{initial}$) or the black leaf tea product (for or $NIC_{final}$) with 200 ml freshly boiled water for 2 minutes; and wherein
- $\Delta NIC$ is -0.1 to -2.0 and $\Delta L^*$ is -1.0 to -8.0.

**12.** A process as claimed in any one of claims 1 to 10 wherein:

- the black leaf tea starting material has an infusion L* value of $L^*_{initial}$,
- the black leaf tea product has an infusion L* value of $L^*_{final}$, and
- the difference in infusion L* value is $\Delta L^*$, and $\Delta L^* = (L^*_{initial}) - (L^*_{final})$,
- wherein infusion the infusion L* value is determined for an infusion liquor obtained by contacting 2 g of the black leaf tea starting material (for $L^*_{initial}$) or the black leaf tea product (for $L^*_{final}$) with 200 ml freshly boiled water for 2 minutes;
- the black leaf tea starting material has a Normalised Infusion Colour of $NIC_{initial}$,
- the black leaf tea product has a Normalised Infusion Colour of $NIC_{final}$, and
- the difference in Normalised Infusion Colour is $\Delta NIC$, and $\Delta NIC = (NIC_{final}) - (NIC_{initial})$,
- wherein Normalised Infusion Colour is expressed in terms of a* values per mg/ml of infusion solids as determined for an infusion liquor obtained by contacting 2 g of the black leaf tea starting material (for $NIC_{initial}$) or the black leaf tea product (for or $NIC_{final}$) with 200 ml freshly boiled water for 2 minutes; and wherein
- $\Delta NIC$ is -0.1 to -2.0 and $\Delta L^*$ is 1.5 to 11.

**13.** A process as claimed in any one of claims 1 to 12 wherein the black leaf tea product is blended with one or more additional black leaf teas.

**14.** A process as claimed in any one of claims 1 to 13 wherein the process comprises the additional and subsequent step of packaging the black leaf tea product.

**15.** A black leaf tea product obtainable by the process as claimed in any one of claims 1 to 12.

**Patentansprüche**

**1.** Verfahren zum Herstellen eines Schwarzteeblatt-Produkts, wobei das Verfahren Folgendes umfasst:

- Bereitstellen von Schwarzteeblattmaterial, das einen Feuchtigkeitsgehalt von weniger als 20 Gew.-% hat, als Ausgangsmaterial; und dann
- Beaufschlagen des Schwarzteeblatt-Ausgangsmaterials mit einem Wärmebehandlungsschritt durch Herstellen eines Kontakts mit einer erwärmten Oberfläche auf einer Temperatur von 60 °C bis 100 °C in Gegenwart von Dampf während einer Dauer von wenigstens 2 Minuten.

2. Verfahren nach Anspruch 1, wobei die Dauer des Wärmebehandlungsschrittes 3 bis 25 Minuten beträgt.

3. Verfahren nach Anspruch 1 oder nach Anspruch 2, wobei der Dampf mit einer Durchflussmenge von wenigstens 1 kg pro Stunde bereitgestellt wird.

4. Verfahren nach einem der Ansprüche 1 bis 3, wobei der Dampf mit einer Durchflussmenge von weniger als 25 kg pro Stunde bereitgestellt wird.

5. Verfahren nach einem der Ansprüche 1 bis 4, wobei die erwärmte Oberfläche eine Temperatur von 65 °C bis 95 °C hat.

6. Verfahren nach einem der Ansprüche 1 bis 5, wobei das Schwarzteeblatt-Ausgangsmaterial einen Feuchtigkeitsgehalt von weniger als 10 Gew.-% hat.

7. Verfahren nach einem der Ansprüche 1 bis 6, wobei das Schwarzteeblatt-Ausgangsmaterial eine Teemischung ist.

8. Verfahren nach einem der Ansprüche 1 bis 7, wobei das Schwarzteeblatt-Produkt einen Feuchtigkeitsgehalt von weniger als 20 Gew.-% hat.

9. Verfahren nach Anspruch 8, wobei das Schwarzteeblatt-Produkt einen Feuchtigkeitsgehalt von weniger als 10 Gew.-% hat.

10. Verfahren nach einem der Ansprüche 1 bis 9, wobei der Wärmebehandlungsschritt in einer eingeschlossenen Atmosphäre ausgeführt wird.

11. Verfahren nach einem der Ansprüche 1 bis 10, wobei:

    - das Schwarzteeblatt-Ausgangsmaterial einen Aufgusswert L* hat, der gleich $L*_{initial}$ ist,
    - das Schwarzteeblatt-Produkt einen Aufgusswert L* hat, der gleich $L*_{final}$ ist, und
    - die Differenz des Aufgusswertes L* gleich $\Delta L*$ ist, wobei $\Delta L* = (L*_{initial}) - (L*_{final})$ ist,
    - der Aufgusswert L* für ein Aufgussgetränk bestimmt wird, das durch Herstellen eines Kontakts zwischen 2 g des Schwarzteeblatt-Ausgangsmaterials (für $L*_{initial}$) oder des Schwarzteeblatt-Produkts (für $L*_{final}$) und 200 ml frisch gekochten Wassers für 2 Minuten erhalten wird;
    - das Schwarzteeblatt-Ausgangsmaterial eine standardisierte Aufgussfarbe $NIC_{initial}$ hat,
    - das Schwarzteeblatt-Produkt eine standardisierte Aufgussfarbe $NIC_{final}$ hat und
    - die Differenz der standardisierten Aufgussfarbe gleich $\Delta NIC$ ist, wobei $\Delta NIC = (NIC_{final}) - (NIC_{initial})$ ist,
    - wobei die standardisierte Aufgussfarbe durch a*-Werte pro mg/ml von Aufgussfeststoffen ausgedrückt wird, die für ein Aufgussgetränk bestimmt werden, das durch Herstellen eines Kontakts zwischen 2 g des Schwarzteeblatt-Ausgangsmaterials (für $NIC_{initial}$) oder des Schwarzteeblatt-Produkts (für $NIC_{final}$) und 200 ml frisch gekochten Wassers für 2 Minuten erhalten wird; und wobei
    - $\Delta NIC$ gleich -0,1 bis -2,0 ist und $\Delta L*$ gleich -1,0 bis -8,0 ist.

12. Verfahren nach einem der Ansprüche 1 bis 10, wobei:

    - das Schwarzteeblatt-Ausgangsmaterial einen Aufgusswert L* hat, der gleich $L*_{initial}$ ist,
    - das Schwarzteeblatt-Produkt einen Aufgusswert L* hat, der gleich $L*_{final}$ ist, und
    - die Differenz des Aufgusswertes L* gleich $\Delta L*$ ist, wobei $\Delta L* = (L*_{initial}) - (L*_{final})$ ist,
    - der Aufgusswert L* für ein Aufgussgetränk bestimmt wird, das durch Herstellen eines Kontakts zwischen 2 g des Schwarzteeblatt-Ausgangsmaterials (für $L*_{initial}$) oder des Schwarzteeblatt-Produkts (für $L*_{final}$) und 200 ml frisch gekochten Wassers für 2 Minuten erhalten wird;
    - das Schwarzteeblatt-Ausgangsmaterial eine standardisierte Aufgussfarbe $NIC_{initial}$ hat,
    - das Schwarzteeblatt-Produkt eine standardisierte Aufgussfarbe $NIC_{final}$ hat und
    - die Differenz der standardisierten Aufgussfarbe gleich $\Delta NIC$ ist, wobei $\Delta NIC = (NIC_{final}) - (NIC_{initial})$ ist,
    - wobei die standardisierte Aufgussfarbe durch a*-Werte pro mg/ml von Aufgussfeststoffen ausgedrückt wird, die für ein Aufgussgetränk bestimmt werden, das durch Herstellen eines Kontakts zwischen 2 g des Schwarzteeblatt-Ausgangsmaterials (für $NIC_{initial}$) oder des Schwarzteeblatt-Produkts (für $NIC_{final}$) und 200 ml frisch gekochten Wassers für 2 Minuten erhalten wird; und wobei
- $\Delta$NIC gleich -0,1 bis -2,0 ist und $\Delta$L* gleich 1,5 bis 11 ist.

**13.** Verfahren nach einem der Ansprüche 1 bis 12, wobei das Schwarzteeblatt-Produkt mit einem oder mehreren zusätzlichen Schwarzteeblättern gemischt wird.

**14.** Verfahren nach einem der Ansprüche 1 bis 13, wobei das Verfahren den zusätzlichen und nachfolgenden Schritt des Verpackens des Schwarzteeblatt-Produkts umfasst.

**15.** Schwarzteeblatt-Produkt, das durch das Verfahren nach einem der Ansprüche 1 bis 12 erhalten werden kann.

**Revendications**

**1.** Procédé pour la fabrication d'un produit de thé noir en feuille, le procédé comprenant :

. la fourniture d'un matériau de thé noir en feuille présentant une teneur en humidité inférieure à 20 % en masse comme un matériau de départ ; et puis
. la soumission du matériau de départ de thé noir en feuille à une étape de traitement thermique par mise en contact de celui-ci avec une surface chauffée à une température de 60°C à 100°C en présence de vapeur sur une durée d'au moins 2 minutes.

**2.** Procédé selon la revendication 1, dans lequel la durée de l'étape de traitement thermique est de 3 à 25 minutes.

**3.** Procédé selon la revendication 1 ou la revendication 2, dans lequel la vapeur est fournie à un débit d'au moins 1 kg par heure.

**4.** Procédé selon l'une quelconque des revendications 1 à 3, dans lequel la vapeur est fournie à un débit inférieur à 25 kg par heure.

**5.** Procédé selon l'une quelconque des revendications 1 à 4, dans lequel la surface chauffée est à une température de 65°C à 95°C.

**6.** Procédé selon l'une quelconque des revendications 1 à 5, dans lequel la matière de départ de thé noir en feuille présente une teneur en humidité inférieure à 10 % en masse.

**7.** Procédé selon l'une quelconque des revendications 1 à 6, dans lequel la matière de départ de thé noir en feuille est un mélange de thés.

**8.** Procédé selon l'une quelconque des revendications 1 à 7, dans lequel le produit de thé noir en feuille présente une teneur en humidité inférieure à 20 % en masse.

**9.** Procédé selon la revendication 8, dans lequel le produit de thé noir en feuille présente une teneur en humidité inférieure à 10 % en masse.

**10.** Procédé selon l'une quelconque des revendications 1 à 9, dans lequel l'étape de traitement thermique est réalisée dans une atmosphère confinée.

**11.** Procédé selon l'une quelconque des revendications 1 à 10, dans lequel :

. le matériau de départ de thé noir en feuille présente une valeur L* d'infusion de $L^*_{initial}$,
. le produit de thé noir en feuille présente une valeur d'infusion L* de $L^*_{final}$, et
. la différence de valeurs d'infusion L* est $\Delta$L*, et $\Delta$L* = $(L^*_{initial})$ - $(L^*_{final})$,
. dans laquelle infusion la valeur d'infusion L* est déterminée pour une liqueur d'infusion obtenue par mise en contact de 2g du matériau de départ de thé noir en feuille (pour $L^*_{initial}$) ou du produit de thé noir en feuille (pour $L^*_{final}$) avec 200 ml d'eau fraîchement bouillie pendant 2 minutes ;
. le matériau de départ de thé noir en feuille présente une couleur d'infusion normalisée de $NIC_{initial}$,
. le produit de thé noir en feuille présente une couleur d'infusion normalisée de $NIC_{final}$, et

. la différence de couleur d'infusion normalisée est $\Delta$NIC, et $\Delta$ NIC = (NIC$_{final}$) - (NIC$_{initial}$),
. dans lequel la couleur d'infusion normalisée est exprimée en termes de valeurs a* par mg/ml de solides d'infusion comme déterminée pour une liqueur d'infusion obtenue par mise en contact de 2 g du matériau de départ de thé noir en feuille (pour NIC$_{initial}$) ou du produit de thé noir en feuille (pour NIC$_{final}$) avec 200 ml d'eau fraîchement bouillie pendant 2minutes ; et dans lequel
. $\Delta$NIC est de -0,1 à -2,0 et $\Delta$L* est de -1,0 à -8,0.

12. Procédé selon l'une quelconque des revendications 1 à 10, dans lequel :

. le matériau de départ de thé noir en feuille présente une valeur L* d'infusion de L*$_{initial}$,
. le produit de thé noir en feuille présente une valeur d'infusion L* de L*$_{final}$, et
. la différence de valeurs d'infusion L* est $\Delta$L*, et $\Delta$L* = (L*$_{initial}$) - (L*$_{final}$),
. dans laquelle infusion la valeur d'infusion L* est déterminée pour une liqueur d'infusion obtenue par mise en contact de 2 g du matériau de départ de thé noir en feuille (pour L*$_{initial}$) ou du produit de thé noir en feuille (pour L*$_{final}$) avec 200 ml d'eau fraichement bouillie pendant 2 minutes ;
. le matériau de départ de thé noir en feuille présente une couleur d'infusion normalisée de NIC$_{initial}$,
. le produit de thé noir en feuille présente une couleur d'infusion normalisée de NIC$_{final}$, et
. la différence de couleur d'infusion normalisée est $\Delta$NIC, et $\Delta$NIC = (NIC$_{final}$) - (NIC$_{initial}$),
. dans lequel la couleur d'infusion normalisée est exprimée en termes de valeurs a* par mg/ml de solides d'infusion comme déterminée pour une liqueur d'infusion obtenue par mise en contact de 2 g du matériau de départ de thé noir en feuille (pour NIC$_{initial}$) ou du produit de thé noir en feuille (pour NIC$_{final}$) avec 200 ml d'eau fraîchement bouillie pendant 2 minutes ; et dans lequel
. $\Delta$NIC est de -0,1 à -2,0 et $\Delta$L* est de 1,5 à 11.

13. Procédé selon l'une quelconque des revendications 1 à 12, dans lequel le produit de thé noir en feuille est mélangé avec un ou plusieurs thés noirs en feuille supplémentaires.

14. Procédé selon l'une quelconque des revendications 1 à 13, dans lequel le procédé comprend l'étape supplémentaire et subséquente d'emballage du produit de thé noir en feuille.

15. Produit de thé noir en feuille pouvant être obtenu par le procédé selon l'une quelconque des revendications 1 à 12.

**EP 3 496 549 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014206883 A


**Non-patent literature cited in the description**

- Tea: Cultivation to consumption. 1992